# DEMANDE DE BREVET EUROPEEN

(11) **EP 2 815 798 A1**
(43) Date de publication de la demande: **24.12.2014**
(21) Numéro de dépôt: 14170972.5
(22) Date de dépôt: 03.06.2014
(51) Int. Cl.: B01D 53/04, B01D 53/047, C01B 21/04

(54) **Procédé d'épuration d'un mélange gazeux par adsorption à variation de pression et générateur correspondant**

(30) Priorité: 18.06.2013 FR 1355708
(71) Demandeur: Nitrocraft, 44410 Herbignac (FR)
(72) Inventeur: LE DAMANY, Yoann, 56400 SURZUR (FR)
(74) Mandataire: De Cuenca, Emmanuel Jaime

(57) **Abrégé**

Procédé d'épuration d'un mélange gazeux par adsorption à variation de pression (PSA) le procédé utilisant un générateur (10) de gaz à adsorption par variation de pression (PSA) utilisant trois colonnes (1, 2, 3) d'adsorbant disposées en parallèle entre une ligne (4) d'alimentation du mélange de gaz et une ligne (5) de production du gaz enrichi via un système de vannes (11, 12, 13, 21, 22, 23, 31, 32, 33), les trois colonnes (1, 2, 3) étant utilisées simultanément chacune selon des cycles de travail successifs comprenant i) une phase de remplissage de la colonne avec du mélange de gaz, (ii) une phase de génération du gaz enrichi par adsorption dans la colonne (1, 2, 3) et (iii) une phase de purge de la colonne pour régénérer cette dernière, caractérisé en ce que les cycles de travail des trois colonnes (1, 2, 3) sont décalés et se chevauchent pour produire du gaz enrichi en continu, la phase de génération d'une première colonne (1) étant simultanée à la phase de remplissage d'une seconde colonne (2) et simultanée à la phase de purge de la troisième colonne (3)

## Description

La présente invention concerne un procédé d'épuration d'un mélange gazeux et un générateur de gaz correspondant.

L'invention concerne plus particulièrement un procédé d'épuration d'un mélange gazeux par adsorption à variation de pression dans lequel un composant gazeux, notamment de l'oxygène, est retiré d'un mélange tel que de l'air, pour générer un gaz enrichi, notamment un gaz enrichi en azote, le procédé utilisant un générateur de gaz à adsorption par variation de pression utilisant trois colonnes d'adsorbant disposées en parallèle entre une ligne d'alimentation du mélange de gaz et une ligne de production du gaz enrichi via un système de vannes, les trois colonnes étant utilisées simultanément chacune selon des cycles de travail successifs comprenant i) une phase de remplissage de la colonne avec du mélange de gaz, (ii) une phase de génération du gaz enrichi par adsorption dans la colonne et (iii) une phase de purge de la colonne pour régénérer cette dernière.

A l'issue d'une phase de génération et avant une phase de purge, la colonne est soumise de préférence à une phase intermédiaire d'équilibrage avec une autre colonne qui est en fin de phase de purge.

Un générateur de gaz enrichi, par exemple un générateur d'azote, produit habituellement de l'azote pur ou très concentré à partir d'un dispositif de type PSA (« Pressure Swing Adsorption » en anglais), c'est-à-dire un procédé d'épuration à adsorption par variation de pression utilisant des colonnes de tamis moléculaire (appelés également des lits). Le gaz enrichi produit est stocké dans une cuve tampon ou fourni directement dans une application réceptrice.

La pression du gaz enrichi produit peut osciller entre la pression atmosphérique et la pression de sortie maximum du générateur.

En cas de pression dans les colonnes inférieure à une certaine pression déterminée, les performances du tamis moléculaire peuvent être altérées. Il est donc nécessaire de prévoir une contre-pression à opposer aux colonnes lors de leur remplissage par le mélange à purifier.

De plus, la pression du gaz enrichi produit par les colonnes est fluctuante et donc généralement incompatible avec le besoin d'une pression constante au niveau de l'application consommatrice du gaz enrichi.

Un générateur d'azote standard comprend généralement deux colonnes d'adsorbant. Chaque colonne décrit un cycle de production de gaz de forme générale en créneau (une augmentation asymptotique de la pression de gaz produit durant une phase de remplissage, puis une phase de production au cours de laquelle la pression du gaz produit est constante, puis une phase de purge au cours de laquelle la pression du gaz produit décroît de façon exponentielle).

Un tel dispositif connu génère en sortie du générateur une pression (ou un débit) de gaz enrichi discontinue (pression variant entre 8 et 2 bar par exemple).

Un avantage de ce fonctionnement est qu'il permet l'équilibrage des pressions entre les colonnes au moment du basculement. En effet, cet équilibrage entre les deux colonnes intervient au moment du basculement de chacune des colonnes (de l'état de remplissage à l'état de purge et inversement) lors duquel une liaison directe est ouverte un court instant entre les deux colonnes pour que la pression s'équilibre entre celles-ci. Ceci permet d'augmenter la valeur du niveau bas de pression produit par le générateur.

En effet, au moment du basculement des colonnes (remplissage/purge) le gaz présent dans la colonne pleine vient remplir la colonne vide à une pression proche de la moitié de la sienne juste avant le basculement. Un tel procédé permet une économie considérable de l'air nécessaire au fonctionnement de l'appareil. La pression reste cependant discontinue en sortie du générateur avec par exemple un minimum égal à 3,5 bar environ.

Il est possible de réduire la taille des creux de pression du gaz produit en diminuant les temps de purge des colonnes pour que les cycles de remplissage des deux colonnes se chevauchent.

Avec ce type de fonctionnement, la pression du gaz produit qu'il est possible de maintenir dépend de la réduction du temps de purge. Une réduction trop importante du temps de purge dégrade cependant le rendement du générateur. Ainsi, ce type de fonctionnement ne permet pas de garantir une pression continue de gaz enrichi égale par exemple à 8 bar au dessus de la pression atmosphérique

Un autre inconvénient de ce type de fonctionnement est qu'il interdit tout équilibrage de pression entre les colonnes tel qu'il est généralement préconisé car les basculements de chacune des colonnes ne surviennent pas au même moment. Le rendement de l'appareil est ainsi lourdement pénalisé en ce qui concerne la quantité d'air nécessaire pour une quantité de gaz enrichi produit

Une solution consiste à prévoir en aval des colonnes une cuve de génération. Ceci est cependant couteux et augmente l'encombrement de l'installation.

Une autre solution consiste à prévoir une vanne de régulation en aval des colonnes. Mais cette solution ne permet d'obtenir en sortie du générateur qu'une pression et un débit discontinus.

Des systèmes de PSA à trois colonnes existent. Cependant ces derniers nécessitent des cycles complexes fonctionnant selon neuf ou douze étapes distinctes. De plus, ces systèmes connus génèrent des à-coups de pression en sortie de PSA.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que les cycles de travail des trois colonnes sont décalés et se chevauchent pour produire du gaz enrichi en continu, la phase de génération d'une première colonne étant simultanée à la phase de remplissage d'une seconde colonne et simultanée à la phase de purge de la troisième colonne.

Par ailleurs, des modes de réalisation de l'invention peuvent comporter l'une ou plusieurs des caractéristiques suivantes :
- les phases de génération successives de trois colonnes se chevauchent deux à deux pour délivrer dans la ligne de production une pression ou un débit de gaz continu,
- chaque cycle de travail comprend une phase d'équilibrage entre d'une part une colonne avant sa phase de remplissage et, d'autre part, une autre colonne après sa phase de génération et avant sa phase de purge,
- au cours d'un cycle de travail de chaque colonne, la durée de la phase de génération est 1,5 à 3 fois et de préférence le double de la durée de phase de purge,
- le mélange gazeux est de l'air est fourni en continu dans la ligne d'alimentation, les colonnes comprenant un adsorbant de l'oxygène pour fournir dans la ligne de production un gaz enrichi en azote,
- les trois lits sont utilisés selon les cycles définis par les chronogrammes ci-dessous comprenant six temps successifs (T1 à T6):

| | T1 | T2 | T3 | T4 | T5 | T6 |
|---|---|---|---|---|---|---|
| 1 | E1/2 | R1 | G1 | G1 | E3/1 | P1 |
| 2 | E1/2 | P2 | E2/3 | R2 | G2 | G2 |
| 3 | G3 | G3 | E2/3 | P3 | E3/1 | R3 |

dans lequel 1, 2, et 3 représentent respectivement les trois colonnes ; En/m représente une étape d'équilibrage entre les colonnes n et m ; Rn une étape de remplissage de la colonne n ; Gn une étape de génération de colonne n (n, m symbolisant les colonnes 1, 2 ou 3,
- le gaz enrichi en azote est produit dans la ligne de production à une pression comprise entre 6 et 16 bar et de préférence entre 7 et 9 bar,

L'invention concerne également un générateur d'azote à adsorption par variation de pression comprenant trois colonnes d'adsorbant sélectif de l'oxygène disposées en parallèle entre une ligne d'alimentation du mélange de gaz et une ligne de production du gaz enrichi, le générateur comprenant un système de vannes de commande des flux gazeux, le système de vannes comprenant trois vannes respectives d'alimentation en air des colonnes, trois vannes respectives de purge des colonnes, trois vannes respectives d'équilibrage disposées sur des lignes reliant les colonnes deux à deux et trois vannes respectives reliant les colonnes à la ligne de production, le générateur comprenant une logique électronique de commande reliées aux vannes, la logique électronique de commande étant configurée pour piloter les vannes et commander l'utilisation simultanée des colonnes selon des cycles de travail successifs comprenant i) une phase de remplissage de la colonne avec du mélange, (ii) une phase de génération du gaz enrichi et (iii) une phase de purge de la colonne, dans lesquels les cycles de travail des trois colonnes sont décalés et se chevauchent pour produire du gaz enrichi en continu, la phase de génération d'une première colonne étant simultanée à la phase de remplissage d'une seconde colonne et simultanée à la phase de purge de la troisième colonne.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant un exemple de structure et de fonctionnement d'un générateur de gaz selon l'invention,
- la figure 2 illustre un exemple de courbes de pression P1, P2, P3 de gaz enrichi produit par trois colonnes d'adsorbant selon un exemple de fonctionnement de l'invention.

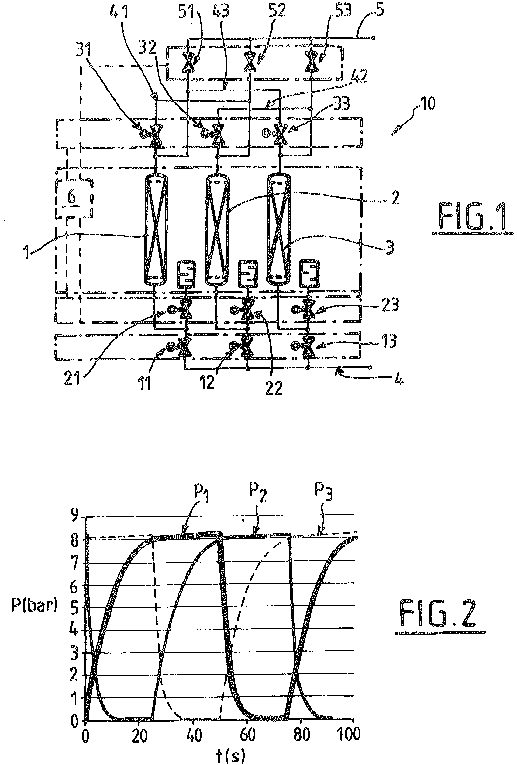

Le générateur 10 de gaz illustré à la figure 1 est par exemple un générateur d'azote. Le générateur 10 est du type à adsorption par variation de pression PSA.

Le générateur 10 comprend trois colonnes 1, 2, 3 d'adsorbant sélectif de l'oxygène. A cet effet les colonnes contiennent un adsorbant approprié, notamment un adsorbant sélectif cinétiquement pouvant inclure des CMS (« Carbon Molecular Sieves » et des zéolites.

Les trois colonnes 1, 2, 3 sont disposées en parallèle entre une ligne 4 commune d'alimentation du mélange de gaz et une ligne 5 de production commune fournissant le gaz enrichi à une application. Le circuit du générateur 10 comprend un système de vanne 11, 12, 13, 21, 22, 23, 31, 32, 33, par exemple des vannes pneumatiques commandées. Le système de vannes comprend trois vannes 11, 12, 13 respectives d'alimentation en air des colonnes reliant les colonnes à la ligne 4 d'alimentation.

Trois autres vannes 21, 22, 23 respectives de purge des colonnes 1, 2, 3, sont prévues pour relier chaque colonne 1, 2, 3 à l'atmosphère extérieur afin de régénérer les colonnes.

De plus, trois vannes 31, 32, 33 respectives d'équilibrage sont prévues sur des lignes 41, 42, 43 d'équilibrage reliant les colonnes 1, 2, 3 entre elles par paire. Ces vannes d'équilibrage permettent de mettre en communication les colonnes deux par deux afin de réaliser un équilibrage de pression entre ces paires de colonnes.

Enfin, trois vannes 51, 52, 53 aval respectives peuvent être prévues pour relier les colonnes 1, 2, 3 à la ligne 5 de production commune.

De préférence, le générateur 10 comprend une logique 6 électronique de commande reliée aux vannes.

La logique 6 électronique de commande est configurée pour piloter les vannes et commander l'utilisation simultanée des colonnes 1, 2, 3 selon des cycles de travail successifs comprenant i) une phase de remplissage de la colonne avec du mélange, (ii) une phase de génération du gaz enrichi et (iii) une phase de purge de la colonne. Selon une particularité avantageuse, les cycles de travail des trois colonnes 1, 2, 3 se chevauchent et sont décalés pour produire du gaz enrichi en continu, la phase de génération d'une première colonne 1 étant simultanée à la phase de remplissage d'une seconde colonne 2 et simultanée à la phase de purge de la troisième colonne 3.

Un exemple d'une telle génération de gaz est illustré à la figure 2 (pressions P1, P2, P3 de gaz produites en bar en fonction du temps t en seconde par chacune des trois colonnes 1, 2, 3).

Comme visible à la figure 2, chaque colonne 1, 2, 3 décrit un profil de pression de gaz enrichi produit en fonction du temps en forme de créneau comprenant un temps de remplissage (montée en pression rapide de forme générale asymptotique), puis un temps de génération (sommet du créneau, pression de gaz enrichi constante ou quasi constante c'est-à-dire ne présentant pas de variation supérieure à 10% par exemple) puis un temps de purge (pression du gaz enrichi produit décroissant rapidement de façon exponentielle).

Les phases de remplissage et de génération se chevauchent d'une colonne (1, 2, 3) à l'autre (2, 3, 1) pour maintenir un débit de gaz enrichi produit à une pression et une pureté constantes en sortie du générateur.

Le chevauchement des phases de génération (deux à deux) est réalisé pour délivrer une quantité de gaz enrichi continue et constante (pas de discontinuité due à une chute de pression ou de débit).

Ainsi une phase de génération d'une (première) colonne (c'est-à-dire lorsqu'une première colonne produit et délivré du gaz enrichi dans la ligne 5 de production reliée à l'utilisateur) est à un moment simultanée avec la phase de génération d'une autre (seconde) colonne (c'est-à-dire que la seconde colonne produit et délivre également en même temps du gaz enrichi dans la ligne 5 de production reliée à l'utilisateur pour y maintenir un niveau de pression constant).

Comme illustré à la figure 2 ce chevauchement des phases de génération de deux colonnes peut se produire sur une durée très courte voir infinitésimale comme illustré à la figure 2 (par exemple 0,01 seconde à 0,1 seconde).

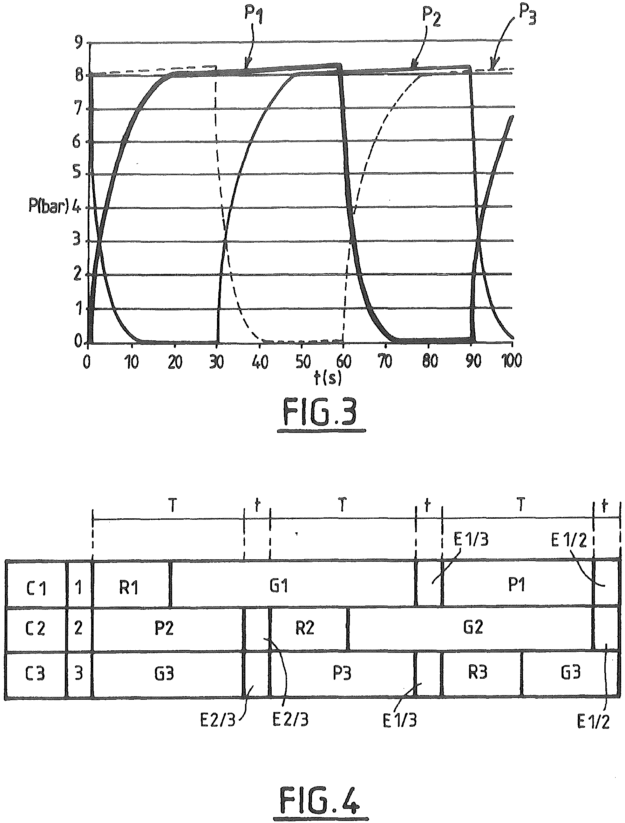

Bien entendu, ce chevauchement des phases de génération de deux colonnes peut se produire sur un temps plus long comme illustré schématiquement à la figure 3 (par exemple entre une et vingt secondes par exemple).

Un chronogramme de fonctionnement est illustré à titre d'exemple à la figure 4, C1, C2, C3 désignant respectivement les trois colonnes, R désignant une phase de remplissage, P désignant une phase de purge, et G désignant une phase de génération (les numéros adjoints 1, 2, 3 désignant la colonne considérée par ladite phase).

En/m désigne l'équilibrage de pression entre les colonnes n et m (n et m étant différents et choisis parmi 1, 2 et 3) pendant une durée t.

Ainsi chaque phase d'adsorption (remplissage R et génération G) est deux fois plus longue que la phase de désorption (purge P). Les phases de purge P ont une durée T comprise de préférence entre 25 et 90 secondes.

De préférence, les phases de génération G ont une durée de deux fois la durée T de purge, plus la durée t d'équilibrage, moins la durée de la phase de remplissage R. Les phases d'équilibrage E ont une durée t comprise de préférence entre 0 secondes et 5 secondes.

Les phases de remplissage R ont une durée comprise entre une valeur quasi nulle (par exemple 0,01 secondes à 0,1 secondes) et la durée T de la phase de purge.

Ceci permet de produire un gaz enrichi, par exemple de l'azote, de façon continue et constante sans cuve de génération.

Une telle installation permet :
- d'améliorer la compacité de l'installation,
- de lisser les pics de consommation d'air du générateur;
- de générer une pression relative supérieure en sortie du générateur,
- de fournir un débit de gaz enrichi continu en sortie du générateur.

L'invention permet de générer une pression de gaz enrichi constante, par exemple égale à 8 bar g (c'est-à-dire, égale à 8 bar lu sur manomètre).

L'architecture selon l'invention et son fonctionnement permettent de prévoir des temps de purge relativement réduits, par exemple comme dans les solutions connues.

La réduction du temps de purge des colonnes peut dégrader le rendement de l'installation par rapport à un fonctionnement classique avec des temps de génération et de purge équilibrés. Néanmoins, le facteur de « marche » ou de « génération » de l'installation est augmenté. Ceci permet de compenser cette perte de rendement. En effet, selon l'invention les colonnes peuvent générer du gaz enrichi pendant 2/3 du temps de cycle contre la moitié du temps de cycle selon un fonctionnement classique de l'art antérieur.

Le chevauchement des cycles des trois colonnes 1, 2, 3 permet l'équilibrage des pressions entre les colonnes 1, 2, 3 si un temps de purge de l'ordre du temps de génération divisé par deux est adopté. Cet équilibrage de pression entre deux colonnes, relativement simple sur un modèle à deux colonnes est plus délicat sur la solution à trois colonnes selon l'invention. En effet, l'architecture à trois colonnes 1, 2, 3 nécessite de prendre quelque dispositions supplémentaires.

Ainsi, l'équilibrage ne doit pas être réalisé entre les trois colonnes simultanément car cela viderait la colonne qui vient de reprendre la valeur supérieure de pression dans celle qui doit se remplir et donc occasionnerait une chute de pression en sortie du générateur.

A cet effet, les trois vannes 41, 42, 43 d'équilibrage disposées en aval des colonnes 1, 2, 3 sont ouvertes brièvement (par exemple pendant 5 secondes) et successivement à chaque basculement d'une colonne à l'autre (entre une purge et un remplissage) pour équilibrer la pression entre la colonne en purge et celle en remplissage.

De préférence le générateur 10 comprend donc neuf vannes pneumatiques de trois types distincts, à savoir :
- trois vannes 11, 12, 13 d'alimentation en air (une vanne par colonne),
- trois vannes de purge 21, 22, 23 (une vanne par colonne),
- trois vannes d'équilibrage 41, 42, 43 (une vanne par « couple possible » de colonnes).

Ainsi la vanne d'équilibrage 31 permet de relier la première colonne 1 à la seconde colonne 2 pour assurer un pré-remplissage de la première colonne 1 par la seconde 2 etc...

Outre les avantages relevés ci-dessus, l'invention permet de générer un gaz enrichi au moyen de trois colonnes utilisées selon des cycles simples de fonctionnement (trois à six étapes).

De plus, la pression fournie par le générateur est constante et sans à-coup.

Enfin, l'invention utilise préférentiellement des cycles de génération durant lesquels il y a 1/3 de temps de purge pour 2/3 de temps de génération. C'est-à-dire que les colonnes 1, 2, 3 génèrent du gaz enrichi durant 66% du temps de cycle soit une production par colonne doublée par rapport aux solutions connues qui utilisent 2/3 du temps de cycle pour la purge pour 1/3 de temps de cycle pour la production. (Un PSA « classique » prévoit la moitié du temps de cycle pour la génération et l'autre moitié pour la purge).

Bien entendu, les données numériques présentées dans le descriptif et les figures (telles que celles de pression et de temps) sont données à titre indicatif. En aucun cas ces exemples ne restreignent la portée de l'invention qui peut être mise en oeuvre avec des pressions et des temps différents.

## Revendications

1. Procédé d'épuration d'un mélange gazeux par adsorption à variation de pression (PSA) dans lequel un composant gazeux, notamment de l'oxygène, est retiré d'un mélange tel que de l'air, pour générer un gaz enrichi, notamment un gaz enrichi en azote, le procédé utilisant un générateur (10) de gaz à adsorption par variation de pression (PSA) utilisant trois colonnes (1, 2, 3) d'adsorbant disposées en parallèle entre une ligne (4) d'alimentation du mélange de gaz et une ligne (5) de production du gaz enrichi via un système de vannes (11, 12, 13, 21, 22, 23, 31, 32, 33), la ligne (5) de production étant destinée à être reliée à un utilisateur du gaz enrichi les trois colonnes (1, 2, 3) étant utilisées simultanément chacune selon des cycles de travail successifs comprenant i) une phase de remplissage de la colonne avec du mélange de gaz, (ii) une phase de génération du gaz enrichi par adsorption dans la colonne (1, 2, 3) durant laquelle la colonne produit du gaz enrichi et délivre ce gaz enrichi dans la ligne (5) de production et (iii) une phase de purge de la colonne pour régénérer cette dernière, **caractérisé en ce que** les cycles de travail des trois colonnes (1, 2, 3) sont décalés et se chevauchent pour produire du gaz enrichi en continu, la phase de génération d'une première colonne (1) étant simultanée à la phase de remplissage d'une seconde colonne (2) et simultanée à la phase de purge de la troisième colonne (3), et **en ce que** les phases de génération successives des trois colonnes (1, 2, 3) se chevauchent deux à deux pour délivrer dans la ligne (5) de production une pression ou un débit de gaz continu, chaque colonne 1, 2, 3 décrivant un profil de pression de gaz enrichi produit en fonction du temps en forme de créneau comprenant un temps de remplissage (montée en pression rapide de forme générale asymptotique), puis un temps de génération (pression de gaz enrichi constante) puis un temps de purge (pression du gaz enrichi produit décroissant rapidement de façon exponentielle), les phases de remplissage et de génération se chevauchant d'une colonne (1, 2, 3) à l'autre (2, 3, 1) pour maintenir un débit de gaz enrichi produit à une pression et une pureté constantes.

2. Procédé selon la revendication 1, **caractérisé en ce que** chaque cycle de travail comprend une phase d'équilibrage entre d'une part une colonne (1, 2, 3) avant sa phase de remplissage et, d'autre part, une autre colonne (2, 3, 1) après sa phase de génération et avant sa phase de purge.

3. Procédé selon l'une quelconque des revendications 1 ou 2, **caractérisé en ce que**, au cours d'un cycle de travail de chaque colonne (1, 2, 3), la durée de la phase de génération est 1,5 à 3 fois et de préférence le double de la durée de phase de purge.

4. Procédé selon l'une quelconque des revendications 1 à 3, **caractérisé en ce que** les trois lits (1, 2, 3) sont utilisés selon les cycles définis par les chronogrammes ci-dessous 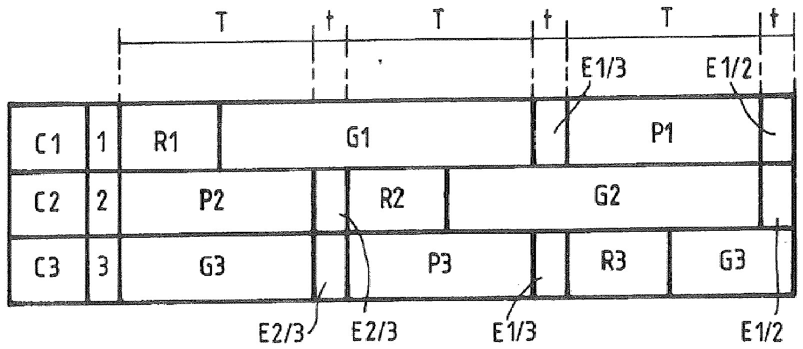 dans lesquels C1, C2, C3 désignent respectivement les trois colonnes, R désignant une phase de remplissage, P désignant une phase de purge, et G désignant une phase de génération (les numéros adjoints 1, 2, 3 désignant la colonne considérée par ladite phase), En/m désignant l'équilibrage de pression entre les colonnes n et m (n et m étant différents et choisis parmi 1, 2 et 3), le phases de purge P ayant une durée T comprise entre 25 et 90 secondes, les phases d'équilibrage ayant une durée t comprise entre 0 secondes et 5 secondes.

5. Procédé selon l'une quelconque des revendications 1 à 3, **caractérisé en ce que** les trois lits (1, 2, 3) sont utilisés selon les cycles définis par les chronogrammes ci-dessous comprenant six temps successifs (T1 à T6):
| | T1 | T2 | T3 | T4 | T5 | T6 |
|---|---|---|---|---|---|---|
| 1 | E1/2 | R1 | G1 | G1 | E3/1 | P1 |
| 2 | E1/2 | P2 | E2/3 | R2 | G2 | G2 |
| 3 | G3 | G3 | E2/3 | P3 | E3/1 | R3 |
dans lequel 1, 2, et 3 représentent respectivement les trois colonnes ; En/m représente une étape d'équilibrage entre les colonnes n et m ; Rn une étape de remplissage de la colonne n ; Gn une étape de génération de colonne n (n, m symbolisant les colonnes 1, 2 ou 3).

6. Procédé selon l'une quelconque des revendications 1 à 5, **caractérisé en ce que** le mélange gazeux est de l'air est fourni en continu dans la ligne (4) d'alimentation, les colonnes (1, 2, 3) comprenant un adsorbant de l'oxygène pour fournir dans la ligne de production un gaz enrichi en azote.

7. Procédé selon la revendication 6, **caractérisé en ce que** le gaz enrichi en azote est produit dans la ligne de production à une pression comprise entre 6 et 16 bar et de préférence entre 7 et 9 bar.

8. Procédé selon l'une quelconque des revendications 1 à 7, **caractérisée en ce que** la durée du chevauchement des phases de génération successives de deux colonnes est comprise entre 0,01 seconde et vingt cinq secondes et de préférence entre 0,1 et vingt secondes et encore plus préférentiellement entre une et quinze secondes.

9. Procédé selon l'une quelconque des revendications 1 à 8, **caractérisée en ce qu'**à l'issue d'une phase de génération et avant une phase de purge, chaque colonne est soumise à une phase intermédiaire d'équilibrage avec une autre colonne qui est en fin de phase de purge.

10. Générateur d'azote à adsorption par variation de pression (PSA) comprenant trois colonnes (1, 2, 3) d'adsorbant sélectif de l'oxygène disposées en parallèle entre une ligne (4) d'alimentation du mélange de gaz et une ligne (5) de production du gaz enrichi, le générateur comprenant un système de vannes (11, 12, 13, 21, 22, 23, 31, 32, 33) de commande des flux gazeux, le système de vannes comprenant trois vannes (11, 12, 13) respectives d'alimentation en air des colonnes, trois vannes (21, 22, 23) respectives de purge des colonnes (1, 2, 3), trois vannes (31, 32, 33) respectives d'équilibrage disposées sur des lignes (41, 42, 43) reliant les colonnes (1, 2, 3) deux à deux et trois vannes (51, 52, 53) respectives reliant les colonnes (1, 2, 3) à la ligne (5) de production, le générateur (10) comprenant une logique (6) électronique de commande reliées aux vannes, la logique (6) électronique de commande étant configurée pour piloter les vannes et commander l'utilisation simultanée des colonnes (1, 2, 3) selon des cycles de travail successifs comprenant i) une phase de remplissage de la colonne avec du mélange, (ii) une phase de génération du gaz enrichi et (iii) une phase de purge de la colonne, dans lesquels les cycles de travail des trois colonnes (1, 2, 3) sont décalés et se chevauchent pour produire du gaz enrichi en continu, chaque colonne 1, 2, 3 décrivant un profil de pression de gaz enrichi produit en fonction du temps en forme de créneau comprenant un temps de remplissage (montée en pression rapide de forme générale asymptotique), puis un temps de génération (pression de gaz enrichi constante) puis un temps de purge (pression du gaz enrichi produit décroissant rapidement de façon exponentielle), les phases de remplissage et de génération se chevauchant d'une colonne (1, 2, 3) à l'autre (2, 3, 1) pour maintenir un débit de gaz enrichi produit à une pression et une pureté constantes, la phase de génération d'une première colonne (1) étant simultanée à la phase de remplissage d'une seconde colonne (2) et simultanée à la phase de purge de la troisième colonne (3).
